# EUROPEAN PATENT APPLICATION

(11) **EP 1 617 420 A2**
(43) Date of publication of application: **18.01.2006**
(21) Application number: 05015100.0
(22) Date of filing: 12.07.2005
(51) Int. Cl.: G11B 5/62

(54) **Magnetic recording medium**

(30) Priority: 12.07.2004 JP 2004204907
(71) Applicant: FUJI PHOTO FILM CO., LTD., Minami-Ashigara-shi, Kanagawa (JP)
(72) Inventor: Kamisawa, Shiho, Odawara-shi Kanagawa (JP); Doushita, Hiroaki, Odawara-shi Kanagawa (JP)
(74) Representative: HOFFMANN EITLE

(57) **Abstract**

A magnetic recording medium comprising: a non-magnetic support; and a coating layer including a magnetic layer which contains a ferromagnetic powder containing a rare earth element and a binder and optionally a non-magnetic layer which contains a non-magnetic inorganic powder and a binder, wherein an amount of a liberated rare earth element in the coating layer is not more than 30 ppm.

## Description

### FIELD OF THE INVENTION

The present invention relates to a magnetic recording medium and in particular, to a magnetic recording medium which has excellent storage stability, running durability and electromagnetic conversion characteristics and which is reduced in staining of a magnetic head at the time of running.

### BACKGROUND OF THE INVENTION

A magnetic recording medium is broadly used for video, audio or computer, etc. A coating type magnetic recording medium is, in general, of a construction in which a magnetic layer having a ferromagnetic powder dispersed in a binder is laminated on a support. In recent years, in the magnetic recording field, digital recording which is less in deterioration of recording that conventional analog recording is developing towards practical use. In the digital recording, a number of signals are required as compared with the analog recording. Moreover, in recent years, since not only high image quality and high tone quality but also size reduction and space saving are required for recording and reproducing units and recording media, realization of recording with more higher density is required.

In order to achieve high-density recording, it is required to make the wavelength of a recording signal short and to make the recording track narrow. In a magnetic recording medium, it is attempted to granulate a ferromagnetic powder and to highly pack it and also to super-smoothen the medium surface. For example, for the sake of enhancing dispersibility and storage stability following the granulation of the ferromagnetic powder, for the sake of containing a rare earth element on the surface of a ferromagnetic powder or increasing a packing degree of the ferromagnetic powder, there is employed a method in which an organic phosphoric acid compound such as phenylphosphonic acid and benzylphosphonic acid is adsorbed on the ferro-magnetic powder, thereby enhancing dispersibility of the ferromagnetic powder.

JP-A-7-22224 discloses a ferromagnetic metal powder having the content of an element belonging to the group la of the periodic table of not more than 0.05 % by weight and optionally containing from 0.1 to 30 atomic %, based on the whole amount of metal elements, of aluminum and further from 0.1 to 10 atomic %, based on the whole amount of metal elements, of a rare earth element (inclusive of Y), with a residual amount of an element belonging to the group 2a of the periodic table being not more than 0.1 % by weight.

JP-A-2001-23146 describes a magnetic recording medium in which dispersibility of a ferromagnetic powder, etc. is enhanced by using a specific organic phosphoric acid compound for the purpose of enhancing electromagnetic conversion characteristics and durability.

JP-A-5-73898 describes a magnetic recording medium using an organic phosphorus compound having a function to prevent rust and a function to enhance dispersibility of a ferromagnetic metal powder.

In order to achieve high-density recording, it is necessary to shorten a writing rate into a magnetic recording medium or a reading rate from a magnetic recording medium, and an enhancement of the number of rotation of a cylinder or a delivery rate of a magnetic tape is also required. For example, the number of rotation of a magnetic head is 9,600 rpm in a digital video tape recorder and is markedly high as compared with the number of rotation (1,800 rpm) for a civil analog video tape recorder. For that reason, since a rate of sliding of the magnetic recording medium and the magnetic head becomes high, the magnetic recording medium is also required to have higher running durability. In particular, if the magnetic recording medium stains the magnetic head at the time of slide contact, since the electromagnetic conversion characteristics are largely deteriorated, an improvement thereof was required.

For the purposes of enhancing running properties, durability and preservability, preventing staining of a head at the time of running and preventing the generation of staining of a guide, JP-A-2001-160211 describes a magnetic recording medium having a magnetic layer containing from 0 to 10 ppm of an iron ion capable of forming a complex with benzohydroxamic acid based on the ferromagnetic metal powder and a non-magnetic layer containing an α-Fe₂O₃ powder the surface of which has been treated with oxides and/or hydroxides of Al and Zn.

### SUMMARY OF THE INVENTION

An object of the invention is to provide a magnetic recording medium which can reduce staining of a magnetic head and which is excellent in storage stability, running durability and electromagnetic conversion characteristics.

According to studies of the present inventors, it has been noted that for the sake of enhancing dispersibility and storage stability following the granulation of a ferromagnetic powder, if a ferromagnetic powder containing a rare earth element on the surface thereof is used, the amount of the rare earth element as liberated into a magnetic layer increases with an increase of the amount of the rare earth element to be used, resulting in staining of a magnetic heaf at the time of running of a magnetic recording medium.

Furthermore, it has been ascertained that if an organic phosphoric acid compound such as phenylphosphonic acid and benzylphosphonic acid is used in a coating solution for magnetic layer or a coating solution for non-magnetic layer, though such an organic phosphoric acid compound is adsorbed on the particle surface of the ferromagnetic powder, whereby its dispersibility can be enhanced, when a part of the organic phosphoric acid compound is present in a liberated state without being adsorbed on the ferromagnetic powder and the amount of the thus liberated organic phosphoric acid compound is large, it causes liberation of the rare earth element contained in the ferromagnetic powder.

That is, the object of the invention is achieved by the following magnetic recording media.
(1) A magnetic recording medium comprising a non-magnetic support having provided thereon a coating layer comprising a magnetic layer containing a ferromagnetic powder containing a rare earth element and a binder, wherein the amount of a liberated rare earth element in the coating layer is not more than 30 ppm.
(2) A magnetic recording medium comprising a non-magnetic support having provided thereon a coating layer comprising a non-magnetic layer containing a non-magnetic inorganic powder and a binder and a magnetic layer containing a ferromagnetic powder containing a rare earth element and a binder, wherein the amount of a liberated rare earth element in the coating layer is not more than 30 ppm.
(3) The magnetic recording medium as set forth above in (1) or (2), wherein the coating layer contains an organic phosphoric acid compound, and the amount of liberated P in the coating layer is not more than 8.5 ppm.
(4) The magnetic recording medium as set forth above in any one of (1) to (3) , wherein the content of the rare earth element in the ferromagnetic powder is from 10 to 20 atomic % based on the whole amount of metal elements.
(5) The magnetic recording medium as set forth above in any one of (1) to (4), wherein the ferromagnetic powder has a particle size in the range of from 10 to 60 nm.

According to the invention, it is possible to provide a magnetic recording medium which can reduce staining of a magnetic head and which is excellent in storage stability, running durability and electromagnetic conversion characteristics.

### DETAILED DESCRIPTION OF THE INVENTION

The magnetic recording medium of the invention will be described below in more detail.

The magnetic recording medium of the invention is a magnetic recording medium having a coating layer comprising a magnetic layer, or a coating layer comprising a non-magnetic layer and a magnetic layer provided therein, wherein the amount of a liberated rare earth element in the coating layer is not more than 30 ppm.

In the invention, the amount of a liberated rare earth element means a value as measured by the following measurement method. That is, a coating solution for providing a coating layer is subjected to ultracentrifugation, a supernatant is subjected to acid decomposition, and the amount of the liberated rare earth element as contained therein is measured by using an induction coupled plasma mass spectrometer (ICP-MS). Such a measurement method can be carried out by using commercially available device and reagent. For example, Beckman's TL-100 (a trade name) is enumerated as an ultracentrifuge. With respect to the ultracentrifugation condition, the ultracentrifugation can be carried out at the number of rotation of 100,000 rpm for a centrifugation time of 80 minutes. Furthermore, nitric acid can be used for the acid decomposition, and for example, concentrated nitric acid can be used in a volume of two times the supernatant. Moreover, with respect to ICP-MS, there is enumerated a trade name HP4500 (manufactured by Yokogawa Analytical Systems Inc.). Separately, in the case where the measurement sample is a commercial product, the coating layer is separated from the magnetic recording medium, the separated material is dissolved in a solvent, and the amount of the liberated rare earth element is measured according the same procedures as described previously.

The magnetic recording medium having a coating layer in which the amount of a liberated rare earth element is not more than 30 ppm has excellent electromagnetic conversion characteristics and scarcely stains a magnetic head at the time of running. Conversely, when the amount of liberated P exceeds 30 ppm, an unnecessary deposit on the surface of the magnetic layer, namely the surface of the magnetic recording medium increases so that staining of the magnetic head is liable to increase, and therefore, such is not preferable. The amount of a liberated rare earth element is preferably not more than 20 ppm, and more preferably not more than 10 ppm.

As one of means for producing a magnetic recording medium having a coating layer in which the amount of a liberated rare earth element is not more than 30 ppm, there is enumerated a method for properly choosing the kind and use amount of an additive containing a phosphorus atom (P) to be contained in the coating layer, for example, an organic phosphoric acid compound.

Examples of the organic phosphoric acid compound which is suitably used in the invention include phenylphosphonic acid, benzylphosphonic acid, benzhydrylphosphonic acid, 2-phenethylphosphonic acid, 4-nitrobenzylphosphonic acid, 3-methoxybenzylphosphonic acid, 4-methoxybenzylphosphonic acid, 4-t-butylbenzylphosphonic acid, 4-methylthiobenzyl-phosphonic acid, 4-methanesulfonylbenzylphosphone, monobenzyl phosphate, and benzylphosphinic acid. Of these specific example, phenylphosphonic acid and benzylphosphonic acid having a phenyl group and a benzyl group, respectively are especially preferable.

It is preferable that the amount of the organic phosphoric acid compound to be used is set up such that the amount of liberated P in the coating layer is not more than 8.5 ppm.

Specifically, in the case where the coating layer is of a single-layer structure made of a magnetic layer, the content (charge amount) of the organic phosphoric acid compound in the coating solution for forming a magnetic layer is preferably from 0.01 to 5 parts by weight, and more preferably from 0.01 to 3 parts by weight based on 100 parts by weight of the ferromagnetic powder.

Furthermore, in the case where the coating layer is a double-layer structure made of a non-magnetic layer and a magnetic layer, the content (charge amount) of the organic phosphoric acid compound in the coating solution for forming a magnetic layer is preferably from 0.01 to 8 parts by weight, and more preferably from 0.01 to 6 parts by weight based on 100 parts by weight of the ferromagnetic powder; and the content (charge amount) of the organic phosphoric acid compound in the coating solution for forming a non-magnetic layer is preferably from 0.01 to 7 parts by weight, and more preferably from 0.01 to 5.5 parts by weight based on 100 parts by weight of the non-magnetic inorganic powder.

The "amount of liberated P" as referred to in the invention means a value as measured by the following measurement method. That is, a coating solution for providing a coating layer is subjected to ultracentrifugation, a supernatant is subjected to acid decomposition, and the amount of liberated P as contained therein is measured by using an induction coupled plasma mass spectrometer (ICP-MS) . Such a measurement method can be carried out by using commercially available device and reagent. For example, Beckman's TL-100 (a trade name) is enumerated as an ultracentrifuge. With respect to the ultracentrifugation condition, the ultracentrifugation can be carried out at the number of rotation of 100,000 rpm for a centrifugation time of 80 minutes. Furthermore, nitric acid can be used for the acid decomposition, and for example, concentrated nitric acid can be used in a volume of two times the supernatant. Moreover, with respect to ICP-MS, there is enumerated a trade name HP4500 (manufactured by Yokogawa Analytical Systems Inc.). Separately, in the case where the measurement sample is a commercial product, the coating layer is separated from the magnetic recording medium, the separated material is dissolved in a solvent, and the amount of the liberated rare earth element is measured according the same procedures as described previously.

The magnetic recording medium having a coating layer in which the amount of liberated P is not more than 8.5 ppm is able to not only enhance dispersibility and packing degree of the ferromagnetic powder but also suppress the liberation of the rate earth element as contained in the ferromagnetic powder. Furthermore, it can provide excellent electromagnetic conversion characteristics. The amount of liberated P is preferably not more than 5.5 ppm, and more preferably not more than 3.5 ppm.

The construction of the magnetic recording medium of the invention including a magnetic layer, a non-magnetic layer, and a non-magnetic support will be described below in detail.

### [Magnetic layer]

A ferromagnetic metal powder and a hexagonal ferrite power are preferable as the ferromagnetic powder to be contained in the magnetic layer. Furthermore, its particle size is preferably from 10 to 60 nm, and more preferably from 10 to 45 nm in terms of an average long axis length in the case of a ferromagnetic metal powder and an average tabular size in the case of a hexagonal ferrite powder, respectively. By making the particle size of the ferromagnetic powder fall within the foregoing range, the packing degree of the ferromagnetic powder increases so that high-density recording characteristics of the magnetic recording medium can be enhanced.

In the invention, a rare earth element is contained in at least a part of the surface of the ferromagnetic powder of the magnetic layer. The "rare earth element" as referred to in the invention includes Sc, Y, La, Ce, Pr, Nd, Pm, Sm, Eu, Gd, Tb, Dy, Ho, Er, Tm, Yb, and Lu, with Y, La, Ce, Pr, Nd, Sm, Gd, Tb, and Dy being preferable.

Furthermore, besides the rare earth element, the ferromagnetic powder may contain atoms such as Al, Si, S, Ca, Ti, V, Cr, Cu, Mo, Rh, Pd, Ag, Sn, Sb, Te, Ba, Ta, W, Re, Au, Hg, Pb, Bi, P, Co, Mn, Zn, Ni, Sr, and B.

According to the invention, for example, by controlling the amount of liberated P in the coating layer at not more than 8.5 ppm as described previously, it is possible to contain the rare earth element in a larger amount than that according to the conventional technologies in the ferromagnetic powder, whereby dispersibility and storage stability can be more enhanced. That is, according to the invention, the content of the rare earth element in the ferromagnetic powder is from 10 to 20 atomic %, and preferably from 12 to 18 atomic % based on the whole amount of metal elements. In this way, by containing a large amount of the rare earth element in the ferromagnetic powder, it is possible to suppress adhesion of soluble salts of basic elements, which is inevitable on the production step of a ferromagnetic powder, and to enhance dispersibility and storage stability. When the content of the rare earth element is 10 atomic % or more based on the whole amount of metal elements, an effect for enhancing dispersibility is more enhanced. Furthermore, when the content of the rate earth element is not more than 20 atomic %, it is possible to enhance dispersibility and storage stability, without deteriorating the magnetic characteristics.

Furthermore, the ferromagnetic powder may be previously treated with a dispersant, a lubricant, a surfactant, an antistatic agent, etc. prior to dispersing. Moreover, the ferromagnetic powder may contain a small amount of water, a hydroxide or an oxide.

### <Ferromagnetic metal powder>

A ferromagnetic alloy powder containing α-Fe as the major compound is preferable as the ferromagnetic metal powder. Furthermore, with respect of the shape of the ferromagnetic metal powder, any of an acicular shape, a granulate shape, a rice grain-like shape, or a tabular shape may be employed. It is especially preferred to use an acicular ferromagnetic powder.

In the case of an acicular ferromagnetic metal powder, an acicular ratio is preferably from 2 to 7, and more preferably from 5 to 7. By making the particle size of the ferromagnetic metal powder fall within the foregoing range, the packing degree of the ferromagnetic metal powder is increased so that the high-density recording characteristics of the magnetic recording medium can be enhanced.

A crystallite size of the ferromagnetic metal powder is preferably from 8 to 20 nm, more preferably from 10 to 18 nm, and further preferably from 12 to 16 nm. This crystallite size is an average value as determined from a half-value width of a diffraction peak by the Scherrer's method under a condition of a radiation source of CuKαI, a tube voltage of 50 kV and a tube current of 300 mA by using an X-ray analyzer (RINT2000 SERIES, manufactured by Rigaku Corporation).

The ferromagnetic metal powder preferably has a specific surface area (S_{BET}), as measured by the BET method, of 40 m²/g or more and less than 70 m²/g, and more preferably from 40 to 60 m²/g. When the specific surface falls within this range, good surface properties and low noises are compatible with each other. It is preferred to optimize a pH of the ferromagnetic metal powder by a combination with a binder to be used. The pH is preferably in the range of from 4 to 12, and more preferably from 7 to 10. If desired, the ferromagnetic metal powder may be subjected to a surface treatment with Al, Si, P, or an oxide thereof. Its amount is from 0.1 to 20 % based on the ferromagnetic metal powder. When the surface treatment is applied, adsorption of a lubricant such as fatty acids becomes not more than 100 mg/m², and therefore, such is preferable.

A coercive force (Hc) of the ferromagnetic metal powder is preferably from 159.2 to 238.8 kA/m (from 2,000 to 3,000 Oe), and more preferably from 167.2 to 230.8 kA/m (from 2,100 to 2,900 Oe). Moreover, a saturation magnetic flux density is preferably from 150 to 300 mT (from 1,500 to 3,000 G) , and more preferably from 160 to 290 mT (from 1,600 to 2,900 G). Furthermore, a saturation magnetization (σs) is preferably from 140 to 170 A·m²/kg (from 140 to 170 emu/g), and more preferably from 145 to 160 A·m²/kg (from 145 to 160 emu/g). It is preferable that an SFD (switching field distribution) of the magnetic material per se is small, and the SFD is preferably not more than 0.8. When the SFD is not more than 0.8, electromagnetic conversion characteristics are good, and an output is high. Also, reversal of magnetization is sharp, and a peak shift becomes small. Accordingly, such is suitable for high-density digital magnetic recording. For the sake of making the Hc distribution small, in the ferromagnetic metal powder, there are a method for making the particle size distribution of goethite good, a method for using monodispersed α-Fe₂O₃, and a method for preventing sintering among particles.

As the ferromagnetic metal powder, ones which are obtained by known production processes can be used, and the following methods can be enumerated. That is, examples thereof include a method for reducing sintering prevention-treated hydrated iron oxide or iron oxide with a reducing gas such as hydrogen to obtain an Fe or Fe-Co particle; a method for reduction with a composite organic acid salt (mainly an oxalic acid salt) and a reducing gas such as hydrogen; a method for thermal decomposition of a metal carbonyl compound; a method for adding a reducing agent such as sodium borohydride, a phosphorous acid salt, and hydrazine in an aqueous solution of a ferromagnetic metal to achieve reduction; and a method for evaporation of a metal in a low-pressure inert gas to obtain a fine powder. The thus obtained ferromagnetic metal powder is subjected to a known slow oxidization treatment. A method for reducing hydrated iron oxide or iron oxide with a reducing gas such as hydrogen and controlling partial pressures of an oxygen-containing gas and an inert gas, the temperature and the time, thereby forming an oxidized film on the surface is preferable because the amount of magnetization is low.

### <Ferromagnetic hexagonal ferrite powder>

Examples of the hexagonal ferrite include barium ferrite, strontium ferrite, lead ferrite, calcium ferrite, and substituted bodies thereof with Co, etc. More specific examples thereof include magnetoplumbite type barium ferrite and strontium ferrite, magnetoplumbite type ferrite in which the particle surface is coated with spinel, and magnetoplumbite type barium ferrite and strontium ferrite partially containing a spinel phase. In general, materials having elements (for example, Co-Zn, Co-Ti, Co-Ti-Zr, Co-Ti-Zn, Ni-Ti-Zn, Nb-Zn-Co, Sb-Zn-Co, and Nb-Zn) added thereto can be used. Also, there are some materials containing inherent impurities depending upon the raw material and production process.

The hexagonal ferrite preferably has a tabular ratio {an average value of (tabular size)/(tabular thickness)} of from 1 to 15, and more preferably from 1 to 7. When the average tabular ratio is from 1 to 15, sufficient alignment properties of the magnetic layer are obtained while keeping high packing properties, and an increase of noises due to stacking among particles can be largely suppressed. Furthermore, in the foregoing particle size range, the specific surface area as measured by the BET method is from 10 to 200 m²/g. This substantially agrees with a calculated value from the tabular size and tabular thickness of the particle.

In general, it is preferable that the distribution of the particle tabular size/tabular thickness of the ferromagnetic hexagonal ferrite powder is as narrow as possible. The particle tabular size/tabular thickness can be digitized by randomly measuring 500 particles from a particle TEM photograph. While the distribution of the particle tabular size/tabular thickness is often not a normal distribution, when measured and expressed in terms of a standard deviation against the mean size, {σ/(mean size)} is from 0.1 to 2.0. In order to make the particle size distribution sharp, not only the particle forming reaction system is made uniform as far as possible, but also the formed particles are subjected to a distribution improving treatment. For example, there are known a method for selectively dissolving an ultra-fine particle in an acid solution and other methods.

The hexagonal ferrite particle preferably has an Hc of from 161.6 to 400 kA/m (from 2,020 to 5,000 Oe), and more preferably from 200 to 320 kA/m (from 2,500 to 4, 000 Oe) . Also, the hexagonal ferrite particle preferably has an SFD of from 0.3 to 0.7.

The Hc can be controlled by the particle size (tabular size and tabular thickness) , the kind and amount of the element to be contained, the substitution site of the element, the particle forming reaction condition, etc.

The hexagonal ferrite particle has a saturation magnetization (σs) of from 40 to 80 A·m²/kg (emu/g). Though it is preferable that the saturation magnetization (σs) is high, when the particle becomes fine, the saturation magnetization (σs) is liable to become small. For the purpose of improving the saturation magnetization (σs), complexing of spinel ferrite with magnetoplumbite ferrite, selection of the kind and addition amount of the element to be contained, and so on are well known. It is also possible to use W type hexagonal ferrite. There is also employed a method in which in dispersing the magnetic material, the surface of the magnetic material particle is treated with a substance adaptive with the dispersion medium and the polymer. As the surface treating agent, inorganic compounds and organic compounds are used. With respect to major compounds, oxides or hydroxides of Si, Al, P, etc., a variety of silane coupling agents, and a variety of titanium coupling agents are representative. The addition amount is from 0.1 to 10 % by weight based on the weight of the magnetic material. The pH of the magnetic material is important for dispersion, too. In general, the pH is from about 4 to 12. Though there is an optimum value depending upon the dispersion medium and the polymer, the pH is chosen to be from about 6 to 11 in view of chemical stability and preservability of the medium. The content of water to be contained in the magnetic material influences the dispersion. Though there is an optimum value depending upon the dispersion medium and the polymer, the content of water is usually chosen to be from 0.01 to 2.0 %.

Examples of the production process of a ferromagnetic hexagonal ferrite powder include (1) a glass crystallization method in which barium oxide, iron oxide and a metal oxide for substituting iron are mixed with a glass forming substance such as boron oxide so as to have a desired ferrite composition, the mixture is melted and then quenched to form an amorphous body, and then, the amorphous body is again heated, rinsed and pulverized to obtain a barium ferrite crystal powder; (2) a hydrothermal reaction method in which a barium ferrite composition metal salt solution is neutralized with an alkali, and after eliminating by-products, the liquid phase is heated at 100 °C or higher, followed by rinsing, drying and pulverization to obtain a barium ferrite crystal powder; and (3) a coprecipitation method in which a barium ferrite composition metal salt solution is neutralized with an alkali, and after eliminating by-products, the residue is dried and treated at not higher than 1,100 °C, followed by pulverization to obtain a barium ferrite crystal powder. However, it should not be construed that the invention is limited to these methods. The ferromagnetic hexagonal ferrite powder may be subjected to a surface treatment with Al, Si, P, or an oxide thereof as the need arises. Its amount is from 0.1 to 10 % by weight based on the ferromagnetic powder; and when subjected to a surface treatment, adsorption of a lubricant such as fatty acids becomes not more than 100 mg/m², and therefore, such is preferable. In some case, the ferromagnetic powder contains soluble inorganic ions of Na, Ca, Fe, Ni, Sr, etc. While it is substantially preferable that the ferromagnetic powder does not contain such soluble inorganic ions, if the content of the soluble inorganic ions is not more than 200 ppm, the characteristics are scarcely affected especially.

### <Binder>

The binder which is used in the magnetic layer of the magnetic recording medium of the invention is a conventionally known thermoplastic resin, thermosetting resin or reactive resin, or a mixture thereof.

The thermoplastic resin has a glass transition temperature of from -100 to 150 °C, a number average molecular weight of from 1,000 to 200,000, and preferably from 10,000 to 100,000, and a degree of polymerization of from about 50 to 1,000. Examples of such a thermoplastic resin include polymers or copolymers containing, as a constituent unit, vinyl chloride, vinyl acetate, vinyl alcohol, maleic acid, acrylic acid, an acrylic ester, vinylidene chloride, acrylonitrile, methacrylic acid, a methacrylic ester, styrene, butadiene, ethylene, vinyl butyral, vinyl acetal, vinyl ether, or the like; polyurethane resins; and a variety of rubber based resins.

Furthermore, examples of the thermosetting resin or reactive resin include phenol resins, epoxy resins, polyurethane curable resins, urea resins, melamine resins, alkyd resins, acrylic reactive resins, formaldehyde resins, silicone resins, epoxy-polyamide resins, mixtures of a polyester resin and an isocyanate prepolymer, mixtures of a polyester polyol and a polyisocyanate, and mixtures of a polyurethane and a polyisocyanate. All of the thermoplastic resin, the thermosetting resin and the reactive resin are described in detail in *Purasuchikku Handobukku* (Plastic Handbook) (published by Asakura Shoten). Moreover, it is possible to use a known electron beam-curable resin in each layer. Examples and production processes thereof are described in detail in JP-A-62-256219.

These resins can be used singly or in combination. Above all, a combination of at least one kind selected from vinyl chloride resins, vinyl chloride-vinyl acetate copolymers, vinyl chloride-vinyl acetate-vinyl alcohol copolymers, and vinyl chloride-vinyl acetate-maleic anhydride copolymers with a polyurethane resin, or a combination thereof further with a polyisocyanate is preferable.

With respect to the structure of the polyurethane resin, ones which are known, such as polyester polyurethanes, polyether polyurethanes, polyether polyester polyurethanes, polycarbonate polyurethanes, polyester polycarbonate polyurethanes, and polycaprolactone polyurethanes, can be used.

With respect to all of the binders as described herein, for the purpose of obtaining more excellent dispersibility and durability, it is preferred to use one in which at least one polar group selected from -COOH, -COO⁻M⁺, -SO₃H, -SO₃⁻M⁺, -OSO₃H, -OSO₃⁻M⁺, -P=O(OH)₂, -P=O(O⁻M⁺)₂, -O-P=O(OH)₂, -O-P=O(O⁻M⁺)₂, -NR₂, -N⁺R₃, an epoxy group, -SH, and -CN (wherein M⁺ represents or an alkali metal base; and R represents a hydrocarbon group) is optically introduced, if desired. An amount of such a polar group is from 10⁻¹ to 10⁻⁸ moles/g, and preferably 10⁻² to 10⁻⁶ moles/g. It is preferable that besides such a polar group, each of the end terminals of the polyurethane molecule has at least one OH group, namely two or more OH groups in total. Since the OH group crosslinks with a polyisocyanate as the curing agent to form a three-dimensional network structure, it is preferable that a number of OH groups are contained in the molecule. In particular, what the OH group is present in the end terminals of the molecule is preferable because reactivity with the curing agent is high. The polyurethane preferably has three or more OH groups, and especially preferably four or more OH groups in the end terminals of the molecule.

In the invention, in the case of using a polyurethane resin, its glass transition temperature is usually from -50 to 150 °C, preferably from 0 to 100 °C, and especially preferably from 30 to 100 °C; its breaking extension is from 100 to 2,000 %; its breaking stress is usually from 0.05 to 10 kg/mm² (from about 0.49 to 98 MPa); and its breakdown point is preferably from 0.05 to 10 kg/mm² (from about 0.49 to 98 MPa). When the polyurethane resin has such physical properties, a coating film having good mechanical characteristics is obtained.

With respect to specific examples of the binder which is used in the invention, examples of vinyl chloride based copolymers include VAGH, VYHH, VMCH, VAGF, VAGD, VROH, VYES, VYNC, VMCC, XYHL, XYSG, PKHH, PKHJ, PKHC, and PKFE (all of which are trade names manufactured by Union Carbide Corporation) ; MPR-TA, MPR-TA5, MPR-TAL, MPR-TSN, MPR-TMF, MPR-TS, MPR-TM, and MPR-TAO (all of which are trade names manufactured by Nissin Chemical Industry Co., Ltd.); 1000W; DX80, DX81, DX82, DX83, and 100FD (all of which are trade names manufactured by Denki Kagaku Kogyo K.K.); and MR-104 , MR-105, MR110, MR100, MR555, and 400X-110A (all of which are trade names manufactured by Zeon Corporation).

Furthermore, examples of polyurethane resins include NIPPOLAN N2301, N2302 and N2304 (all of which are trade names manufactured by Nippon Polyurethane Industry Co., Ltd.); PANDEX T-5105, T-R3080 and T-5201, BURNOCK D-400 and D-210-80, and CRISVON 6109 and 7209 (all of which are trade names manufactured by Dainippon Ink and Chemicals, Incorporated); and VYLON UR8200, UR8300, UR-8700, RV530 and RV280 (all of which are trade names manufactured by Toyobo Co., Ltd.). Examples of polycarbonate polyurethanes include DAIFERAMINE 4020, 5020, 5100, 5300, 9020, 9022 and 7020 (all of which are trade names manufactured by Dainichiseika Color & Chemicals Mfg. Co., Ltd.); MX 5004 (a trade name manufactured by Mitsubishi Chemical Corporation); SANPRENE SP-150 (a trade name manufactured by Sanyo Chemical Industries, Ltd.); and SARAN F310 and F210 (all of which are trade names manufactured by Asahi Kasei Corporation).

Examples of the polyisocyanate which is used in the invention include isocyanates (for example, tolylene diisocyanate, 4,4'-diphenylmethane diisocyanate, hexamethylene diisocyanate, xylylene diisocyanate, naphthylene-1,5-diisocyanate, o-toluidine diisocyanate, iso-phorone diisocyanate, and triphenylmethane triisocyanate); addition products between such an isocyanate and a polyalcohol; and polyisocyanates formed by condensation of such an isocyanate.

Among these isocyanates, examples of trade names of commercially available products include CORONATE L, CORONATE HL, CORONATE 2030, CORONATE 2031, MILLIONATE MR, and MILLIONATE MTL (all of which are manufactured by Nippon Polyurethane Industry Co., Ltd.); TAKENATE D-102, TAKENATE D-110N, TAKENATE D-200, and TAEENATE D-202 (all of which are manufactured by Takeda Pharmaceutical Company Limited); and DESMODUR L, DESMODUR IL, DESMODUR N, and DSEMODUR HL (all of which are manufactured by Sumika Bayer Urethane Co., Ltd.). These can be used singly or in combination of two or more kinds thereof while utilizing a difference in the curing reactivity in each layer.

An addition amount of the binder to be used is generally in the range of from 5 to 50 parts by weight, and preferably from 10 to 30 parts by weight based on the weight of 100 parts by weight of the ferromagnetic powder. In the case where a vinyl chloride based resin is used as the binder, its addition amount is generally in the range of from 5 to 30 parts by weight based on 100 parts by weight of the ferromagnetic powder; and in the case where a polyurethane resin is used, the polyurethane resin is in general used in an amount of from 2 to 20 parts by weight based on 100 parts by weight of the ferromagnetic powder, and it is preferred to use a combination with a polyisocyanate in an amount in the range of from 2 to 20 parts by weight based on 100 parts by the ferromagnetic powder. However, for example, in the case where head corrosion occurs due to a very small amount of eliminated chlorine, it is possible to use only the polyurethane or only the polyurethane and the polyisocyanate.

In the magnetic recording medium of the invention, two or more magnetic layers or a non-magnetic layer, etc. can be provided. In that case, as a matter of course, the amount of the binder, the amount of the vinyl chloride based resin, the polyurethane resin, the polyisocyanate or other resins occupied in the binder, the molecular weight of each of the resins for forming the magnetic layer, the amount of the polar group, the physical characteristics of the resins as described above, and the like can be varied in every layer as the need arises. Rather, they must be optimized for the respective layers, and known technologies regarding multilayered magnetic layers can be applied. For example, in the case where the amount of the binder is changed in the respective layers, it is effective to increase the amount of the binder in the magnetic layer for the sake of reducing scratches on the surface of the magnetic layer. For the sake of making head touch against the head satisfactory, it is possible to impart flexibility by increasing the amount of the binder in the non-magnetic layer as described later.

### <Carbon black>

It is possible to add carbon black in the magnetic layer in the invention as the need arises. The carbon black has functions of preventing static charging of the magnetic layer, reducing a coefficient of friction, imparting light-shielding properties, and enhancing a film strength. Such functions vary depending upon the type of carbon black to be used. Accordingly, in the case where the magnetic recording medium of the invention is of a multilayered construction, it is, as a matter of course, possible to change and choose the type, amount and combination for the respective layers including the magnetic layer according to the intended purpose based on the previously mentioned various characteristics such as particle size, oil absorption, electric conductivity, and pH, and rather, they should be optimized for the respective layers.

Examples of the carbon black to be used include furnace black for rubber, thermal black for rubber, carbon black for coloring, and acetylene black. It is preferable that the carbon black has a specific surface area of from 5 to 500 m²/g, a DBP oil absorption of from 10 to 400 mL/100 g, a mean particle size of from 5 nm to 30 nm, a pH of from 2 to 10, a water content of from 0.1 to 10 %, and a tap density of from 0.1 to 1 g/cc.

Specific examples of trade names which are commercially available for the carbon black which is used in the magnetic layer include BLACKPEARLS 2000, 1300, 1000, 900, 905, 800, 880 and 700 and VULCAN XC-72 (all of which are manufactured by Cabot Corporation); #80, #60, #55, #50, and #35 (all of which are manufactured by Asahi Carbon Co., Ltd.) ; #10B, #30, #40, #650B, #850B, #900, #950, #970B, #1000, #2300, #2400B, #3050B, #3150B, #3250B, #3750B, #3950B, and MA-600 (all of which are manufactured by Mitsubishi Chemical Corporation); CONDUCTEX SC and SC-U, RAVEN 15, 40, 50, 150, 1250, 1255, 1500, 1800, 2000, 2100, 3500, 5250, 5750, 7000, 8000 and 8800, RAVEN-MT-P (all of which are manufactured by Columbian Carbon Co.) ; and Ketjen Black EC (manufactured by Akzo Nobel). Also, with respect to other examples, for example, *Kabon Burakku* Binran (Carbon Black Handbook) (edited by The Carbon Black Association of Japan) can be made hereof by reference.

Those processed by subjecting carbon black to a surface treatment with a dispersant, etc. or grafting with a resin, or by graphitizing a part of the surface thereof may be used. Also, prior to adding carbon black to a magnetic coating material, the carbon black may be previously dispersed with a binder. The carbon black can be used singly or in combination. In the case where carbon black is used, it is preferable that the carbon black is used in an amount in the range of from 0.1 to 30 parts by weight based on 100 parts by weight of the ferromagnetic powder.

### <Other additives, etc.>

In the invention, as other additives which can be added in the magnetic layer, ones having a lubricating effect, an antistatic effect, a dispersing effect, a plasticizing effect, etc. can be used.

Examples thereof include molybdenum disulfide, tungsten disulfide, graphite, boron nitride, graphite fluoride, silicone oils, polar group-containing silicones, fatty acid-modified silicones, fluorine-containing silicones, fluorine-containing alcohols, fluorine-containing esters, polyolefins, polyglycols, alkyl phosphates and alkali metal salts thereof, alkyl sulfates and alkali metal salts thereof, polyphenyl ethers, phenylphosphonic acid, α-naphthyl-phosphoric acid, phenylphosphoric acid, diphenylphosphoric acid, p-ethylbenzenephosphonic acid, phenylphosphinic acid, aminoquinones, a variety of silane coupling agents, titanium coupling agents, fluorine-containing alkyl sulfates and alkali metal salts thereof, monobasic fatty acids having from 10 to 24 carbon atoms (which may contain an unsaturated bond and which may be branched) and their salts of metal (for example, Li, Na, K, and Cu) , monohydric, dihydric, trihydric, tetrahydric, pentahydric or hexahydric alcohols having from 12 to 22 carbon atoms (which may contain an unsaturated bond and which may be branched) , alkoxy alcohols having from 12 to 22 carbon atoms (which may contain an unsaturated bond and which may be branched) , mono-fatty acid esters, di-fatty acid esters of tri-fatty acid esters comprising a monobasic fatty acid having from 10 to 24 carbon atoms (which may contain an unsaturated bond and which may be branched) and any one of monohydric, dihydric, trihydric, tetrahydric, pentahydric or hexahydric alcohols having from 12 to 22 carbon atoms (which may contain an unsaturated bond and which may be branched) , fatty acid esters of a monoalkyl ether of an alkylene oxide polymer, fatty acid amides having from 8 to 22 carbon atoms, and aliphatic amines having from 8 to 22 carbon atoms.

In these specific examples, examples of fatty acids include capric acid, caprylic acid, lauric acid, myristic acid, palmitic acid, stearic acid, behenic acid, oleic acid, elaidic acid, linoleic acid, linolenic acid, and isostearic acid.

Examples of esters include butyl stearate, octyl stearate, amyl stearate, isooctyl stearate, butyl myristate, octyl myristate, butoxyethyl stearate, butoxydiethyl stearate, 2-ethylhexyl stearate, 2-octyldodecyl palmitate, 2-hexyldodecyl palmitate, isohexadecyl stearate, oleyl oleate, dodecyl stearate, tridecyl stearate, oleyl erucate, neopentyl glycol didecanoate, and ethylene glycol dioleate; and examples of alcohols include oleyl alcohol, stearyl alcohol, and lauryl alcohol.

As additives, nonionic surfactants such alkylene oxide based surfactants, glycerin based surfactants, glycidol based surfactants, and alkylphenol ethylene oxide adducts; cationic surfactants such as cyclic amines, ester amides, quaternary ammonium salts, hydantoin derivatives, heterocyclic compounds, phosphonium compounds, and sulfonium compounds; anionic surfactants containing an acid group such as a carboxyl group, a sulfonic group, a phosphoric group, a sulfuric acid ester group, and a phosphoric ester group; and ampholytic surfactants such as amino acids, amino sulfonic acids, sulfuric or phosphoric esters of an amino alcohol, and alkyl betaine types can be used. These surfactants are described in detail in *Kaimen Kasseizai Binran* (Surfactant Handbook) (published by Sangyo Tosho Publishing).

In the magnetic layer of the magnetic recording medium of the invention, the foregoing organic phosphoric acid compound such as phenylphosphonic acid and benzylphosphonic acid can be added.

These additives need not always be completely pure and may contain, in addition to the major components, impurities such as isomers, unreacted materials, by-products, decomposition products, and oxides. The content of these impurities is preferably not more than 30 % by weight, and more preferably not more than 10 % by weight.

These additives which can be used in the invention have a physical action different from each other, and the kind and amount thereof and a ratio in joint use of additives for bringing a synergistic effect should be optimized depending upon the intended purpose.

In general, the whole amount of additives is chosen within the range of from 0.1 % by weight to 50 % by weight, and preferably from 2 % by weight to 25 % by weight based on the ferromagnetic powder of the magnetic layer. Incidentally, as described previously, it is preferred to control the amount of liberated P in the coating layer of the magnetic recording medium of the invention.

All or a part of these additives which can be used in the invention may be added in any stage during the production of a magnetic coating material or a non-magnetic coating material as described later. Examples thereof include the case of mixing with the magnetic material prior to the kneading step, the case of adding in the kneading step of the magnetic material, the binder and the solvent, the case of adding in the dispersing step, the case of adding after dispersing, and the case of adding just before coating. Furthermore, there may be the case where the object can be achieved by coating a part or the whole of the additives after or at the same time of coating of the magnetic layer depending upon the intended purpose. Moreover, it is possible to coat a lubricant on the surface of the magnetic layer after calendaring or after slitting depending upon the intended purpose.

### [Support]

As the support which is used in the invention, a flexible support is preferable. For example, known films such as polyesters (for example, polyethylene terephthalate (PET) and polyethylene naphthalate (PEN)) , polyolefins, cellulose triacetate, polycarbonates, polyamides, polyimides, polyamideimides, polysulfones, and aromatic polyamides (for example, aramid) can be used. Such a support may be previously subjected to a corona discharge treatment, a plasma treatment, a treatment for enhancing adhesion, a thermal treatment, a dust removing treatment, etc. In order to achieve the object of the invention, it is preferred to use a support having a center line average surface roughness of usually not more than 0.03 µm, preferably not more than 0.02 µm, and more preferably not more than 0.01 µm. Also, in such a support, it is preferable that not only the center line average surface roughness is small, but also coarse projections of 1 µm or more are not contained. In addition, the shape of the surface roughness is freely controlled by the size and amount of a filler which is added in the support as the need arises. Examples of such a filler include oxides or carbonates of Ca, Si, Ti, etc. and organic fine powders such as acrylic resins.

The magnetic recording medium of the invention broadly includes ones having a magnetic layer on one surface of a non-magnetic support. The magnetic recording medium of the invention includes ones having other layers than a magnetic layer. For example, the magnetic recording medium may contain a backcoat layer to be provided on the surface opposite to the magnetic layer, a non-magnetic layer containing a non-magnetic powder, a soft magnetic layer containing a soft magnetic powder, a second magnetic layer, a cushioning layer, an overcoat layer, an adhesive layer, and a protective layer. These layers can be provided at a proper position such that their functions can be effectively revealed.

### [Non-magnetic layer]

The magnetic recording medium of the invention is preferably a magnetic recording medium having a non-magnetic layer containing a non-magnetic inorganic powder and a binder between the non-magnetic support and the magnetic layer.

### (Non-magnetic inorganic powder)

The inorganic substance can be selected among inorganic compounds (for example, metal oxides, metal carbonates, metal sulfates, metal nitrides, metal carbides, and metal sulfides) and non-magnetic metals.

Examples of the inorganic compound include titanium oxides (for example, TiO₂ and TiO), α-alumina having an α-component proportion of from 90 to 100 %, β-alumina, γ-alumina, α-iron oxide, chromium oxide, zinc oxide, tin oxide, tungsten oxide, vanadium oxide, silicon carbide, cerium oxide, corundum, silicon nitride, titanium carbide, silicon dioxide, magnesium oxide, zirconium oxide, boron nitride, calcium carbonate, calcium sulfate, barium sulfate, molybdenum disulfide, goethite, and aluminum hydroxide. They are used singly or in combination. In particular, titanium dioxide, zinc oxide, iron oxide, and barium sulfate are preferable; and titanium dioxide and iron oxide are more preferable. Examples of the non-magnetic metal include Cu, Ti, Zn, and Al.

The mean particle size of the non-magnetic inorganic powder is preferably from 0.005 to 2 µm. If desired, non-magnetic powders having a different mean particle size can be used. Also, even when a single non-magnetic powder is used, it is possible to bring the same effect by broadening the particle size distribution. A non-magnetic powder having a mean particle size of from 0.01 µm to 0.2 µm is especially preferable. A pH of the non-magnetic powder is especially preferably from 6 to 9. A specific surface area of the non-magnetic powder is preferably from 1 to 100 m²/g, more preferably from 5 to 50 m²/g, and more preferably from 7 to 40 m²/g. A crystallite size of the non-magnetic powder is preferably from 0.01 µm to 2 µm. An oil absorption using DBP is preferably from 5 to 100 mL/100 g, preferably from 10 to 80 mL/100 g, and more preferably from 20 to 60 mL/100 g. A specific gravity is from 1 to 12, and preferably from 3 to 6. The shape may be in any of an acicular, spindle-like, spherical, polyhedral, or tabular form.

With respect to the binder, lubricant, dispersant, additives, solvent, dispersing method, and others of the non-magnetic layer, those described above for the magnetic layer can be applied. In particular, with respect to the amount and kind of the binder, and the addition amounts and kinds of the additives and dispersant, known technologies regarding the magnetic layer can be applied.

### [Construction of respective layers]

With respect to the thickness of the respective layers, the thickness of the magnetic layer is preferably from 0.03 to 1 µm, more preferably from 0.05 to 0.5 µm, and more preferably from 0.05 to 0.2 µm; and the thickness of the non-magnetic layer is preferably from 0.1 to 3 µm, more preferably from 0.5 to 3 µm, and more preferably from 0.8 to 3 µm. It is preferable that the thickness of the non-magnetic layer is thicker than that of the magnetic layer. Also, a magnetic recording medium in which the magnetic layer is constructed of two layers is preferable. In this case, for example, the thickness of the upper layer is preferably from 0.05 to 1 µm, and more preferably from 0. 05 to 0.5 µm; and the thickness of the lower layer is preferably from 0.5 to 2 µm. Incidentally, in the case where the magnetic layer is constructed of a single layer, the thickness of the magnetic layer is usually from 0.1 to 5 µm, preferably from 0.1 to 3 µm, and more preferably from 0.1 to 1.5 µm. Furthermore, in the case where a soft magnetic layer is present between the non-magnetic support and the magnetic layer, for example, the thickness of the magnetic layer is preferably from 0.03 to 1 µm, and more preferably from 0.05 to 0.5 µm; and the thickness of the soft magnetic layer is preferably from 0.8 to 3 µm.

### [Backcoat layer]

It is desired that the thickness of the backcoat layer to be formed in the magnetic recording medium of the invention is set up within the range of from 0.05 to 0.5 µm, preferably from 0.05 to 0.4 µm, and more preferably from 0.05 to 0.3 µm.

### (Particulate oxide)

It is preferred to use a particulate oxide in the backcoat layer of the magnetic recording medium of the invention. It is preferred to use any of titanium oxide, α-iron oxide, or a mixture thereof as the particulate oxide. As the titanium oxide and α-iron oxide, ones which are usually used can be used. Furthermore, the shape of the particle is not particularly limited. In the case where the shape of the particle is spherical, ones having a particle size of from 0.01 to 0.1 µm are suitable; and in the case where the shape of the particle is acicular, ones having an acicular ratio of from 2 to 20 are suitable, and of these, ones having a long axis length of from 0.05 to 0.3 µm are preferable. At least a part of the surface of the particulate oxide may be modified or coated with other compound such as Al₂O₃, SiO₂, and ZrO₂.

### (Carbon black)

For the purpose of preventing static charging, it is preferred to use carbon black in the backcoat layer. As the carbon black which is used in the backcoat layer, ones which are usually used for magnetic recording tapes can be widely used. Examples of the carbon black which can be used include furnace black for rubber, thermal black for rubber, carbon black for coloring, and acetylene black. In order to prevent transfer of irregularities of the backcoat layer onto the magnetic layer, the particle size of the carbon black is preferably not more than 0.3 µm. The particle size is especially preferably from 0.01 to 0.1 µm. Also, the use amount of the carbon black in the backcoat layer is preferably regulated such that an optical transmission density (a transmission value by Macbeth's TR-927) is in the range of not more than 2.0.

For the sake of enhancing the running durability, it is advantageous to use two kinds of carbon black having a different mean particle size. In this case, a combination of first carbon, black having a mean particle size in the range of from 0.01 to 0.04 µm with second carbon black having a mean particle size in the range of from 0.05 to 0.3 µm is preferable. The content of the second carbon black is suitably from 0.1 to 10 parts by weight, and preferably from 0.3 to 3 parts by weight based on 100 parts by weight of the total sum of the granulate oxide and the first carbon black.

A weight ratio of the granulate oxide to the carbon black is preferably from 60/40 to 90/10, and more preferably from 70/30 to 80/20. By containing the granulate oxide in a larger amount than the carbon black, it is possible to form a backcoat layer having good dispersibility of the powder and having a smooth surface. A coating material for forming a backcoat layer having such a composition has high thixotropy as compared with conventional coating materials for forming a backcoat layer composed mainly of carbon black. For this reason, it is possible to carry out coating in a high concentration by an extrusion system, a gravure system, etc. By coating such a high-concentration coating material, nevertheless its film thickness is thin, it is possible to form a backcoat layer having a high adhesive strength to the support and having a high dynamic strength.

The use amount of a binder is chosen among the range of from 10 to 40 parts by weight, and preferably from 20 to 32 parts by weight based on 100 parts by weight of the total weight of the granulate oxide and the carbon black. The thus formed backcoat layer has a high film strength and low surface electric resistance. As the binder for the backcoat layer in the invention, conventionally known thermoplastic resins, thermosetting resins and reactive resins, etc. can be used.

The backcoat layer usually has a thickness after drying of from about 0.2 to 1 µm, and preferably from 0.2 to 0.6 µm. According to the magnetic recording medium of the invention, even when wound up at a high tension and stored, the backcoat layer hardly transfers onto the magnetic layer, and therefore, it is possible to make the tape thickness at from 4 to 8 µm.

### [Production process of magnetic recording medium]

The magnetic recording medium of the invention can be produced by, for example, coating the respective coating materials on the surface of the non-magnetic support under running such that the layer thickness after drying falls within the foregoing prescribed range. A plurality of the coating material for forming a magnetic layer and the coating material for forming a non-magnetic layer may be successively or simultaneously coated.

As a coating machine for coating the coating material for forming a magnetic layer, an air doctor coater, a blade coater, a rod coater, an extrusion coater, an air knife coater, a squeeze coater, a dip coater, a reverse roll coater, a transfer roll coater, a gravure coater, a kiss coater, a cast coater, a spray coater, a spin coater, etc, can be utilized. With respect to these, for example, *Saishin Kothingu Gijutsu* (Latest Coating Technologies) (May 31, 1983) (published by Sogo Gijutsu Center) can be made hereof by reference.

At the time of producing a magnetic recording tape having two or more layers on one surface thereof, for example, the following methods can be employed.
(1) A method in which a lower layer is first coated by a coater which is generally applied in coating a magnetic coating material (for gravure coating, roll coating, blade coating, extrusion coating, etc.), and before the lower layer is dried, an upper layer is coated by using a support compression type extrusion coater as disclosed in JP-B-1-46186, JP-A-60-238179, and JP-A-2-265672, etc.
(2) A method in which upper and lower layers are substantially simultaneously coated by using one coating head having two liquid passing slits for coating material as disclosed in JP-A-63-88080, JP-A-2-17971, and JP-A-2-265672, etc.
(3) A method in which upper and lower layers are substantially simultaneously coated by using a backup roll-equipped extrusion coater as disclosed in JP-A-2-174965.

The backcoat layer can be prepared by coating a coating material for forming a backcoat layer in which granulate components such as an abrasive and an antistatic agent and a binder are dispersed in an organic solvent on the opposite surface to the magnetic layer. As in the foregoing preferred embodiment, when the use amount of the granulate oxide is larger than that of the carbon black, sufficient dispersibility can be ensured. Accordingly, it is possible to prepare a coating material for forming a backcoat layer without carrying out roll kneading which has hitherto been required. Furthermore, when the content of the carbon black is low, even if cyclohexanone is used as a solvent, it is possible to reduce the amount of residual cyclohexanone after drying.

The coated magnetic layer is coated after subjecting the ferromagnetic powder as contained in the magnetic layer to a magnetic field alignment treatment. The magnetic field alignment treatment can be properly carried out by a method which is well known by those skilled in the art.

The magnetic layer is subjected to a surface smoothening treatment by using a super-calender roll after drying. By carrying out the surface smoothening treatment, voids as formed due to the removal of the solvent at the time of drying disappear, whereby a packing degree of the ferromagnetic powder in the magnetic layer is enhanced. For this reason, it is possible to obtain a magnetic recording tape having high electromagnetic conversion characteristics. As a roll for calender treatment, a heat-resistant plastic roll made of an epoxy resin, a polyimide, a polyamide, a polyamideimide, etc. is used. Also, a metal roll can be used for the treatment.

It is preferable that the magnetic recording medium of the invention has a surface with good smoothness. In order to have good smoothness, for example, it is effective to apply the foregoing calender treatment on the magnetic layer as formed by selecting the foregoing specific binder. The calender treatment is carried out such that a temperature of the calender roll is preferably from 60 to 100 °C, more preferably from 70 to 100 °C, and especially preferably from 80 to 100 °C and that a pressure is preferably from 980 to 4,900 N/m (from 100 to 500 kg/cm), more preferably from 1,960 to 4,410 N/m (from 200 to 450 kg/cm) , and especially preferably from 2,940 to 3,920 N/m (from 300 to 400 kg/cm) . In general, the magnetic recording medium having been subjected to a calender treatment is subjected to a thermal treatment.

The resulting magnetic recording medium can be cut into a desired size by using a cutter, etc. and used. It is preferable that cutting of the magnetic recording medium is carried out by the foregoing slit method. By applying this method, in the end surfaces of the cross-section of the magnetic tape, it is possible to easily control the amount of convexes of the backcoat layer against the top of the support and the amount of convexes of the magnetic layer in the other end surface.

Furthermore, in the magnetic recording medium of the invention, it is desired that a central surface roughness Ra of the magnetic layer as measured by a roughness meter of optical interference type is not more than 5.0 nm, and preferably not more than 4.5 nm in the case of the measurement range of 121 µm x 92 µm and from 8.5 nm to 21.5 nm in the case of the measurement range of 1.2 mm x 0.9 mm, respectively. By providing such irregularities, there gives rise to an advantage that a magnetic recording medium having excellent electromagnetic conversion characteristics and running durability is obtained.

### EXAMPLES

The invention will be described below in further detail with reference to the following Examples and Comparative Examples. Incidentally, all parts are a part by weight.

### (Example 1)

### 1. Coating material for forming a magnetic layer

| | |
|---|---|
| Ferromagnetic metal powder: | 100 parts |
| Composition: Co/Fe = 30 [atomic %], Al/Fe = 6 [atomic %], | |
| Y/Fe = 25 [atomic %] | |
| Anti-sintering agent: Al₂O₃, Y₂O₃ | |
| Coercive force Hc: 2,390 Oe (191.2 kA/m) | |
| Crystallite size: 13.7 nm | |
| Average long axis length: 65 nm | |
| Average acicular ratio: 4.8 | |
| BET specific surface area: 47 m²/g | |
| Saturation magnetization σs: 153 emu/g (153 A·m²/kg) | |
| Polyurethane resin: | 12 parts |
| (Branched side chain-containing polyester polyol/di-(Branched side chain-containing polyester polyol/di-phenylmethane diisocyanate based, containing a polar group: -SO₃Na = 70 eq./ton) | |
| Phenylphosphonic acid: | 6 parts |
| α-Al₂O₃ (mean particle size: 60 nm): | 2 parts |
| Carbon black (mean particle size: 20 nm): | 2 parts |
| Cyclohexanone: | 110 parts |
| Methyl ethyl ketone: | 100 parts |
| Toluene: | 100 parts |
| Butyl stearate: | 2 parts |
| Stearic acid: | 1 part |

### 2. Coating material for forming a non-magnetic layer

| | |
|---|---|
| Non-magnetic powder: | 80 parts |
| α-Iron oxide | |
| Anti-sintering agent: Al₂O₃, Y₂O₃ | |
| Average long axis length: 0.15 nm | |
| Average acicular ratio: 7 | |
| Tap density: 0.8 g/mL | |
| BET specific surface area (S_{EET}): 52 m²/g | |
| pH: 8 | |
| DBP oil absorption: 33 mL/100 g | |
| Carbon black: | 20 parts |
| Mean primary particle size: 16 nm | |
| DBP oil absorption: 120 mL/100 g | |
| pH: 8 | |
| BET specific surface area (S_{BET}) : 250 m²/g | |
| Volatile matter: 1.5 % | |
| Polyurethane resin: | 12 parts |
| (Branched side chain-containing polyester polyol/di-phenylmethane diisocyanate based, containing a polar group: -SO₃Na = 70 eq./ton) | |
| Acrylic resin: | 6 parts |
| (Benzyl methacrylate/diacetoneacrylamide based, containing a polar group: -SO₃Na = 60 eq./ton) | |
| Phenylsulfonic acid: | 3 parts |
| α-Al₂O₃ (mean particle size: 0.2 µm): | 1 part |
| Cyclohexanone: | 140 parts |
| Methyl ethyl ketone: | 170 parts |
| Butyl stearate: | 2 parts |
| Stearic acid: | 1 part |

With respect to each of the coating material for forming a magnetic layer and the coating material for forming a non-magnetic layer, the foregoing respective components were kneaded for 60 minutes by using an open kneader and then dispersed for 120 minutes by using a sand mill. 6 parts of a trifunctional low-molecular weight polyisocyanate compound [CORONATE 3041, manufactured by Nippon Polyurethane Industry Co., Ltd.] was added to each of the resulting dispersions and additionally mixed with stirring for 20 minutes, followed by filtration by a filter having a mean pore size of 1 µm to prepare each of the coating materials.

### 3. Preparation of coating solution for backcoat layer

A kneaded material (i) having the following composition was preliminarily kneaded by using a roll mil, to which was then added a kneaded material (ii) having the following composition, and the mixture was dispersed by using a sand grinder. After completion, 5 parts of a polyester resin and 5 parts of a polyisocyanate were added to prepare a coating solution for backcoat layer.

### Composition of kneaded material (i)

| | |
|---|---|
| Carbon black A (particle size: 40 nm): | 100 parts |

Specific surface area: 45 m²/g
DBP oil absorption: 65 mL/100 mL
pH: 9

| | |
|---|---|
| Nitrocellulose (RS1/2, manufactured by Asahi Kasei Corporation): | 50 parts |
| Polyurethane resin (glass transition temperature: 50 °C) : | 40 parts |

### Dispersant:

| | |
|---|---|
| Copper oleate: | 5 parts |
| Copper phthalocyanine: | 5 parts |
| Precipitated barium sulfate: | 5 parts |
| Methyl ethyl ketone: | 500 parts |
| Toluene: | 500 parts |

### Composition of kneaded material (ii)

| | |
|---|---|
| Carbon black B (particle size: 270 nm): | 100 parts |

Specific surface area: 8.5 m²/g
DBP oil absorption: 36 mL/100 mL
pH: 10

| | |
|---|---|
| Nitrocellulose (RS1/2, manufactured by Asahi Kasei Corporation): | 40 parts |
| Polyurethane resin: | 10 parts |
| Methyl ethyl ketone: | 300 parts |
| Toluene: | 300 parts |

### 4. Preparation of magnetic tape

On a polyethylene naphthalate (PEN) support having a number average molecular weight of 15,000, an intrinsic viscosity of 0.50 dL/g, an SRa (A) of 3.5 nm, and an SRa (B) of 7.5 nm (thickness: 6 µm, Young's modulus in the machine direction (MD) : 800 kg/mm² (7.84 GPa) , Young's modulus in the transverse direction: 650 kg/mm² (6.37 GPa), the resulting coating material for forming a magnetic layer and coating material for forming a non-magnetic layer were subjected to simultaneous double-layer coating in the order of the non-magnetic layer and the magnetic layer in a thickness after drying of 1.5 µm and 0.1 µm, respectively. Next, an alignment treatment was carried out in the state that the magnetic layer was still wet by using a cobalt magnet having a magnetic flux density of 3,000 gausses (300 mT) and a solenoid having a magnetic flux density of 1,500 gausses (150 mT) , followed by drying to form a magnetic layer. Thereafter, the foregoing coating solution for backcoat layer was coated on the other surface of the support (opposite side to the magnetic layer) in a thickness after drying of 0.5 µm and then dried to form a backcoat layer. There was thus obtained a magnetic recording laminate roll in which the magnetic layer was provided on one surface of the support, and the backcoat layer was provided on the other surface thereof. This roll was subjected to a surface smoothening treatment by using a 7-stage calender constructed of only a metal roll at a linear pressure of 300 kg/cm and a temperature of 90 °C. Thereafter, the resulting roll was thermally treated at 70 °C for 48 hours and then slit into a width of 1/2 inches to prepare a magnetic tape.

### (Examples 2 to 5 and Comparative Examples 1 to 4)

Magnetic tape samples were obtained in the same manner as in Example 1, except that in Example 1, the average long axis length of the ferromagnetic metal powder, the amount of the rare earth element, and the blending amount of the organic phosphoric acid compound (phenylphosphonic acid) in the coating solution for forming a magnetic layer were changed as shown in Table 1.

### <Evaluation of magnetic recording medium>

### 1. Measurement of the amount of liberated rare earth element in the coating layer

By using Beckman's TL-100 (a trade name) as an ultracentrifuge, the coating material for forming a magnetic layer and/or the coating material for forming a non-magnetic layer was subjected to ultracentrifugation at 100,000 rpm for 80 minutes to obtain a supernatant. 0.5 mL of this supernatant was collected, to which was then added 1 mL of concentrated nitric acid to achieve acid decomposition. The resulting acid decomposed solution was diluted, and the amount of the liberated rare earth element contained therein was measured by using ICP-MS (a trade name: HP4500, manufactured by Yokogawa Analytical Systems Inc.).

### 2. Measurement of the amount of liberated P in the coating layer

By using Beckman's TL-100 (a trade name) as an ultracentrifuge, the coating material for forming a magnetic layer and/or the coating material for forming a non-magnetic layer was subjected to ultracentrifugation at 100,000 rpm for 80 minutes to obtain a supernatant. 0.5 mL of this supernatant was collected, to which was then added 1 mL of concentrated nitric acid to achieve acid decomposition. The resulting acid decomposed solution was diluted, and the amount of liberated P contained therein was measured by using ICP-MS (a trade name: HP4500, manufactured by Yokogawa Analytical Systems Inc.).

### 3. Magnetic characteristics (Hc and Φm)

Magnetic characteristics of the magnetic tape sample were measured in an applied magnetic field of 10 kOe (7.95774 x 10⁵ A/m) by using a vibration sample magnetometer "VSM-P7" (manufactured by Toei Industry Co., Ltd.) and a DATA processor manufactured by the same company. The thickness of the magnetic layer was determined by observing its ultra-thin section by a transmission electron microscope, capturing and correcting by a photographing magnification. Φm is a magnetization amount per unit area, which was determined by [(saturation magnetic flux density) x (thickness of magnetic layer)].

### 4. Staining of head

With respect to the magnetic tape sample, a reproducing and rewinding operation was repeated 100 times under a circumferential condition at 23 °C and 50 % RH by using a professional digital VTR (DVA PRO) , AJ-D750 (manufactured by Matsushita Electric Industrial Co., Ltd.). After entire running, staining attached in the shoulder portion of each head was visually determined according to the 5-point method. The large the number, the smaller the staining is.

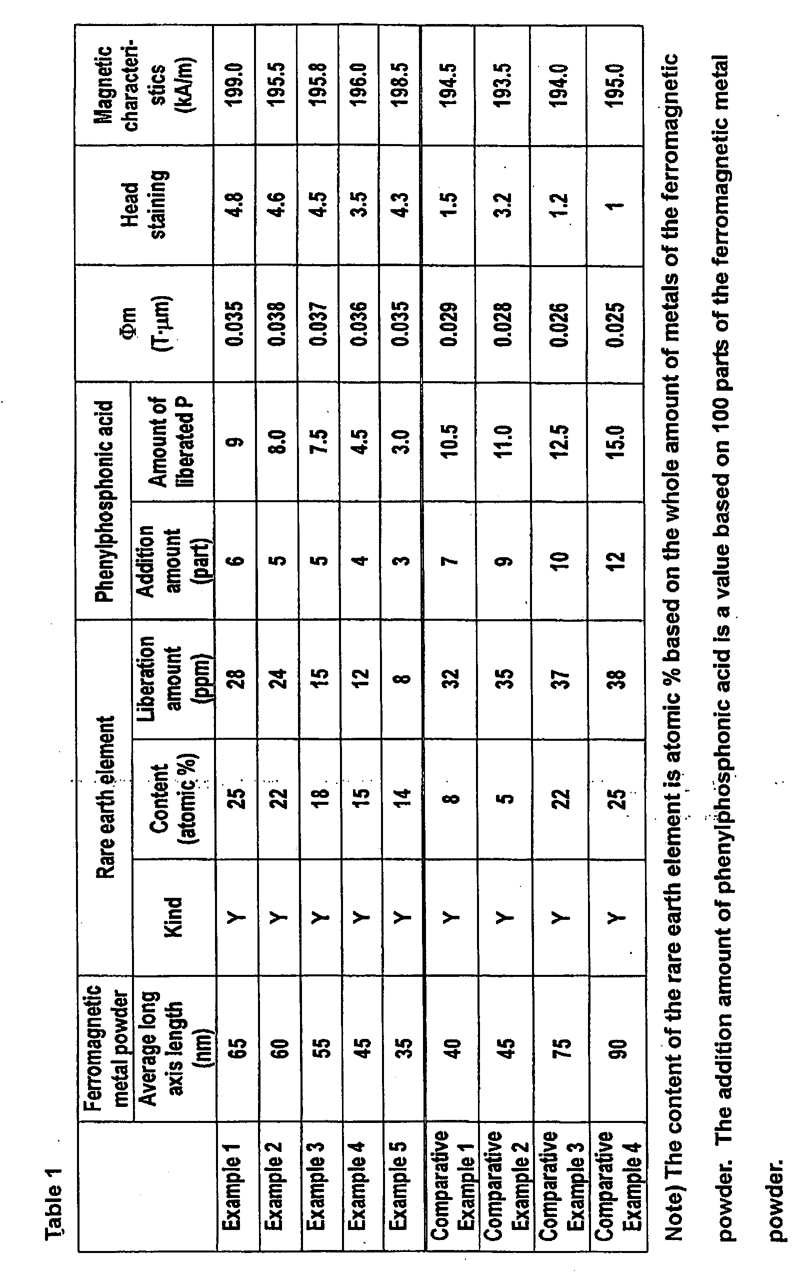

Furthermore, the performance of each of the magnetic tape samples was evaluated. As a result, the following could be noted including the results of Table 1.

In the magnetic tape samples of Examples 1 to 5 in which the amount of the liberated rare earth element in the coating layer is not more than 30 ppm, not only the Φm (magnetization amount per unit area) of the magnetic layer was high, but also the amount of unnecessary deposits on the surface of the magnetic recording medium was low so that the staining of the magnetic head could be reduced, and good electromagnetic conversion characteristics and running durability were revealed.

On the other hand, in all of the magnetic tape samples of Comparative Examples 1 to 4 in which the amount of the liberated rare earth element in the coating layer exceeds 30 ppm, since dispersibility of the ferromagnetic metal powder was insufficient, the packing degree of the magnetic material of the magnetic layer was poor, and the Φm (magnetization amount per unit area) was low. Furthermore, almost all of these magnetic tape samples were dirty with respect to the staining of the magnetic head so that there was a problem in running durability.

This application is based on Japanese Patent application JP 2004-204907, filed July 12, 2004, the entire content of which is hereby incorporated by reference, the same as if set forth at length.

## Claims

1. A magnetic recording medium comprising: a non-magnetic support; and a coating layer including a magnetic layer which contains a ferromagnetic powder containing a rare earth element and a binder, wherein an amount of a liberated rare earth element in the coating layer is not more than 30 ppm.

2. A magnetic recording medium comprising: a non-magnetic support; and a coating layer including a non-magnetic layer which contains a non-magnetic inorganic powder and a binder and a magnetic layer containing a ferromagnetic powder containing a rare earth element and a binder, wherein an amount of a liberated rare earth element in the coating layer is not more than 30 ppm.

3. The magnetic recording medium according to claim 1, wherein the coating layer contains an organic phosphoric acid compound, and an amount of liberated P in the coating layer is not more than 8.5 ppm.

4. The magnetic recording medium according to claim 2, wherein the coating layer contains an organic phosphoric acid compound, and an amount of liberated P in the coating layer is not more than 8.5 ppm.

5. The magnetic recording medium according to claim 1, wherein a content of a rare earth element in the ferromagnetic powder is from 10 to 20 atomic % based on a whole amount of metal elements in the ferromagnetic powder.

6. The magnetic recording medium according to claim 2, wherein a content of a rare earth element in the ferromagnetic powder is from 10 to 20 atomic % based on a whole amount of metal elements in the ferromagnetic powder.

7. The magnetic recording medium according to claim 1, wherein the ferromagnetic powder has a particle size of from 10 to 60 nm.

8. The magnetic recording medium according to claim 2, wherein the ferromagnetic powder has a particle size of from 10 to 60 nm.

9. The magnetic recording medium according to claim 3, wherein the organic phosphoric acid compound is a phenylphosphonic acid or a benzylphosphonic acid.

10. The magnetic recording medium according to claim 4, wherein the organic phosphoric acid compound is a phenylphosphonic acid or a benzylphosphonic acid.
